# EUROPÄISCHE PATENTSCHRIFT

(11) **EP 1 216 848 B1**
(45) Veröffentlichungstag und Bekanntmachung des Hinweises auf die Patenterteilung: **23.02.2005**
(21) Anmeldenummer: 01126732.5
(22) Anmeldetag: 09.11.2001
(51) Int. Cl.: B60B 3/06, B60B 3/10

(54) **Rad für ein Kraftfahrzeug sowie Herstellungsverfahren hierfür**
Wheel for motor vehicle and its method for manufacturing
Roue pour véhicule à moteur et son procédé de fabrication

(30) Priorität: 20.12.2000 DE 10063506
(43) Veröffentlichungstag der Anmeldung: 26.06.2002
(73) Patentinhaber: Bayerische Motoren Werke Aktiengesellschaft, 80809 München (DE)
(72) Erfinder: Lindner, Ulrich, 71067 Sindelfingen (DE); Hartl, Robert, 85368 Moosburg (DE); Ellmann, Manfred, 84172 Buch am Erlbach (DE)

(56) Entgegenhaltungen:
- EP-A- 0 698 507
- EP-A- 0 768 191
- EP-A- 0 826 518
- WO-A-01/17802
- DE-A- 4 103 644
- DE-A- 4 421 470
- US-A- 5 918 947

## Beschreibung

Die Erfindung betrifft ein Rad für ein Kraftfahrzeug mit einem zumindest abschnittsweise innerhalb einer Speiche verlaufenden und im Felgenbett mündenden Luftkanal zur Befüllung eines Reifens. Ferner betrifft die Erfindung ein Herstellverfahren für ein erfindungsgemäßes Rad. Zum technischen Umfeld wird beispielshalber auf die EP 0 698 507 B1 verwiesen.

Ein Rad nach dem Oberbegriff des Patentanspruchs 1 zeichnet sich dadurch aus, dass ein Befüllventil für einen auf die Radfelge aufgezogenen Reifen nicht mehr - wie zumeist üblich - nahe des Felgenhorns angeordnet werden muss, sondern auch andernorts, und zwar bevorzugt nahe der Radnabe - und dort bspw. von einer Radabdeckung verdeckt und somit geschützt - angeordnet werden kann. Ein Verbindungskanal oder Luftkanal zwischen dem bspw. im Bereich der Radnabe angeordneten Reifen-Befüllventil und dem Innenraum des auf die Radfelge aufgezogenen Reifens, d.h. dem sog. Felgenbett, kann dann bevorzugt durch bzw. in einer Speiche verlaufen und dabei direkt in die Speiche hineingearbeitet sein, so dass die Wand der hohlen Speiche die Begrenzungswand des Luftkanals bildet. Hierdurch ist für diesen Verbindungs-Luftkanal keine separate Rohrleitung oder dgl. erforderlich und gleichzeitig ist dieser Luftkanal nicht sichtbar sowie vor Beschädigungen geschützt.

Andererseits weist diese bekannte Lösung auch Nachteile auf. So ist eine absolute Luftdichtheit der Speichenwände erforderlich, was bedeutet, dass diese eine ausreichende Mindestwandstärke besitzen müssen und dass das Rad-Gussmaterial - (bekanntermaßen sind Kfz-Räder üblicherweise aus einer Leichtmetall-Legierung gegossen) - eine ausreichende Gefügequalität aufweist und frei von Lunkern ist. Ferner ist bei der (bspw. aus der genannten EP 0 698 507 B1) bekannten Lösung praktisch lediglich ein geradlinig verlaufender Luftkanal realisierbar. Um einen abgewinkelt verlaufenden Luftkanal realisieren zu können, müssten bspw. mehrere Bohrungen gesetzt und dadurch ineinander übergehende Kanäle geschaffen werden, wobei einige dieser Bohrungen in den Wänden des Rades danach wieder in aufwändiger Weise verschlossen, d.h. abgedichtet werden müssten.

Eine Abhilfemaßnahme für diese geschilderte Problematik aufzuzeigen, ist Aufgabe der vorliegenden Erfindung.
Die Lösung dieser Aufgabe ist dadurch gekennzeichnet, dass der Luftkanal zumindest in der Speiche durch eine beim gießtechnischen Herstellen des Rades in die entsprechende Kokille eingelegte Rohrleitung gebildet wird. Bevorzugt erstreckt sich dabei die Rohrleitung von der Mündungsstelle im Felgenbett bis zum Bereich der Radnabe.

Ein vorteilhaftes Verfahren zur Herstellung eines erfindungsgemäßen Rades zeichnet sich dadurch aus, dass die Rohrleitung beim Gießprozess mit ihrem der Mündungsstelle im Felgenbett gegenüberliegenden Ende über einen Kokilleneinsatz oder einen separaten Schieber in der Kokille gehalten wird, wobei die Rohrleitung während des Gießprozesses über den Kokilleneinsatz oder dgl. auch entlüftet werden kann. Ferner wird vorgeschlagen, dass die Felgenbett-Mündungsstelle der Rohrleitung beim Gießprozess verschlossen ist und im Zuge der spanabhebenden Bearbeitung des Felgenprofils offengelegt wird.

Erfindungsgemäß soll somit beim (ansonsten üblichen) gießtechnischen Herstellen des Rades eine geeignet vorkonfektionierte Rohrleitung in die Gießkokille eingelegt und darin derart positioniert werden, dass am fertigen Gießprodukt, nämlich dem erfindungsgemäßen Rad, diese Rohrleitung innerhalb einer Speiche oder zumindest innerhalb eines Speichenabschnittes liegt. Bevorzugt besteht diese vorkonfektionierte Rohrleitung, die grundsätzlich beliebig geformt bzw. in ihrer Form einfach an einen beliebigen Luftkanal-Verlauf oder Speichenverlauf angepasst sein kann, aus einem geeigneten metallischen Werkstoff. Neben dem großen Vorteil der nahezu beliebigen Formgebung zeichnet sich die vorgeschlagene Rohrleitung auch dadurch aus, dass hiermit eine absolute Dichtheit gewährleistet ist. Durch diese einzige Rohrleitung kann somit der vollständige Luftkanal einstückig gebildet werden, wenn die Rohrleitung mit ihrem einen Ende im Felgenbett (und somit im Innenraum des später auf die Radfelge aufgezogenen Reifens) mündet und mit ihrem anderen Ende derart ausgebildet und positioniert ist, dass ein Reifen-Befüllventil einfach auf dieses andere Ende aufgebracht werden kann.

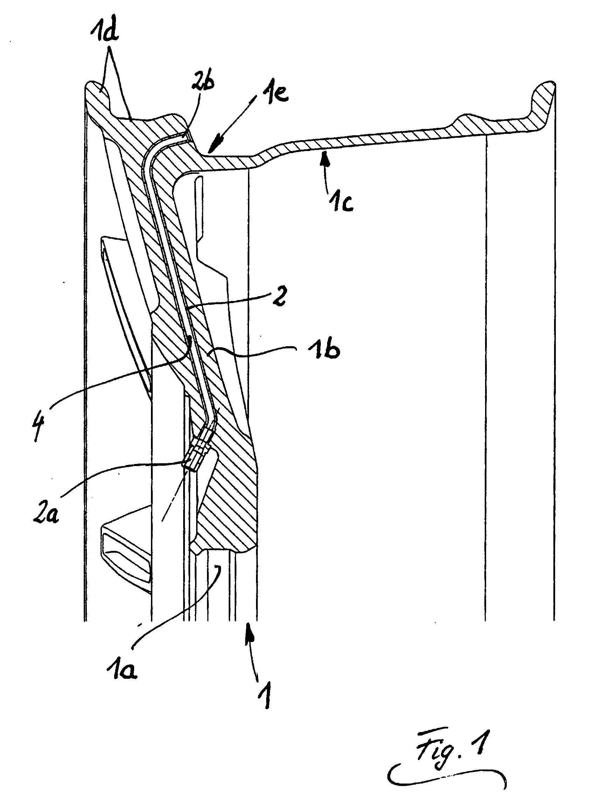

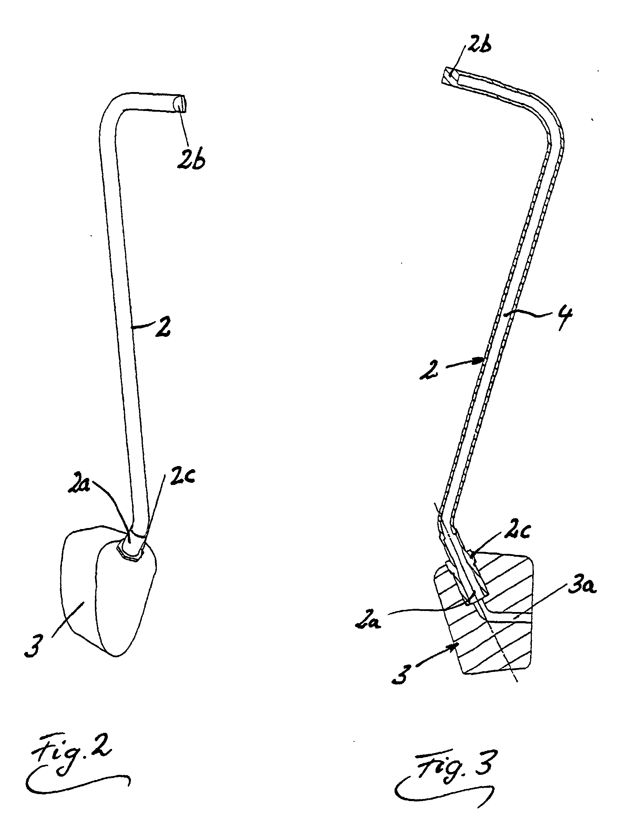

Die beigefügten Figuren zeigen ein bevorzugtes Ausführungsbeispiel der Erfindung, wobei in **Figur 1** ein Teilschnitt durch ein Kfz-Rad im Bereich einer Speiche gezeigt ist, durch welche eine einen Luftkanal bildende Rohrleitung verläuft. **Figur 2** zeigt eine Ansicht der Rohrleitung mit einem im weiteren noch erläuterten sog. Kokilleneinsatz und in **Figur 3** ist ein Schnitt durch die in Fig.2 dargestellten Elemente (in anderer Lage) dargestellt. Erfindungswesentlich können dabei sämtliche näher beschriebenen Merkmale sein.

Bezugnehmend auf **Figur** 1 ist mit der Bezugsziffer 1 ein als Leichtmetall-Gussteil ausgeführtes Rad eines Kraftfahrzeuges, insbesondere eines PKW's, bezeichnet, von dem lediglich ein Teilbereich der Radnabe 1a, eine Speiche 1b sowie ein Teil der Felge 1c dargestellt sind. Wie üblich geht dabei die Speiche 1b in das sog. Felgenhorn 1d über, das seitlich das sog. Felgenbett 1e begrenzt. Wie üblich kann auf die Felge 1c ein nicht dargestellter Reifen aufgezogen werden. In der Speiche 1b (und zwar lediglich in dieser dargestellten Speiche 1b und nicht in weiteren noch vorhandenen Speichen) verläuft eine Rohrleitung 2, die einen Luftkanal 4 (vgl. **Fig.3**) bildet. Indem die Rohrleitung 2 auch noch geeignet das Felgenhorn 1d durchdringt bzw. in diesem verläuft, mündet die Rohrleitung 2 mit ihrem einen Ende 2b im Felgenbett 1e und ragt mit ihrem anderen Ende 2a im Bereich der Radnabe 1a aus dem sog. Nabenabschnitt des Rades 1 heraus. Wenn nun auf das Ende 2a ein nicht dargestelltes Reifen-Befüllventil aufgebracht wird, so ist es möglich, über den Luftkanal 4 bzw. über die diesen bildende Rohrleitung 2 den ebenfalls nicht dargestellten Reifen mit Luft zu befüllen. Ebenfalls nicht dargestellt ist im übrigen eine Radabdeckung, die seitlich (in **Fig.1** von rechts her) auf den Bereich der Radnabe 1a aufgesteckt werden kann, so dass sich das Ende 2a der Rohrleitung 2 (sowie das darauf aufgebrachte Reifen-Befüllventil) geschützt und verdeckt hinter dieser Radabdeckung befinden.

Ein solches Rad 1 mit einer innerhalb einer Speiche 1b (sowie abschnittsweise im Felgenhorn 1d) verlaufenden Rohrleitung 2 kann in einfacher Weise dadurch hergestellt werden, dass beim gießtechnischen Herstellen dieses Rades 1 die geeignet vorkonfektionierte Rohrleitung 2 in die (ansonsten übliche und daher nicht dargestellte) Gieß-Kokille für das Rad eingelegt ist. Bevorzugt ist hierfür ein sog. Kokilleneinsatz 3 vorgesehen, der - zusammen mit der Rohrleitung 2 - in den **Figuren 2 und 3** dargestellt ist, und der die Rohrleitung 2 in der Kokille positioniert und hält. Es kann sich dabei um einen wiederverwendbaren oder um einen verlorenen Kokilleneinsatz 3 handeln, der - wie aus **Fig.1** hervorgeht - gleichzeitig einen Hinterschnitt-Abschnitt im Bereich der Radnabe 1a bildet, um eine gute Zugänglichkeit des Endes 2a der Rohrleitung 2 zu gewährleisten, so dass das nicht dargestellte Reifen-Befüllventil einfach auf dieses Ende 2a aufgeschraubt werden kann.

Es sei darauf hingewiesen, dass anstelle des Kokilleneinsatzes 3 auch ein separater Schieber oder dgl. in der Kokillle vorgesehen sein kann, um die Rohrleitung 2 beim Gießprozess des Rades 1 zu halten. Alternativ kann die Rohrleitung 2 in der Gieß-Kokille unter Verwendung bereits vorhandener einteiliger oder mehrteiliger Kerne gehalten sein.

Zurückkommend auf **Fig.2** erkennt man Schlüsselflächen 2c an der vorkonfektionierten Rohrleitung 2, mit Hilfe derer aufgrund einer komplementären Ausbildung am Kokilleneinsatz 3 (vgl. **Fig.3**) ein Verdrehen der Rohrleitung 2 gegenüber dem Kokilleneinsatz 3 verhindert werden kann. Aus **Fig.**3 ist ferner entnehmbar, dass das Ende 2b (und somit die sog. Felgenbett-Mündungsstelle) der Rohrleitung 2 zunächst verschlossen ist, um zu verhindern, dass beim Gießen des Rades 1 Gußmaterial in das Innere der Rohrleitung 2 gelangt. Letzteres wird am gegenüberliegenden Ende 2a im übrigen durch den Kokilleneinsatz 3 verhindert. Wenn nach abgeschlossenem Gießprozess die Felge 1c des Rades 1 spanabhebend bearbeitet wird, so kann hierbei auch das zunächst verschlossene Ende 2b der Rohrleitung 2 offengelegt werden.

**Fig.3** zeigt weiterhin, dass im Kokilleneinsatz 3 ein letztlich außerhalb der Kokille mündender Entlüftungskanal 3a für den Innenraum bzw. Luftkanal 4 der Rohrleitung 2 vorgesehen ist, über den ein Druckausgleich bezüglich eines thermisch bedingten Druckanstieges des in der Rohrleitung 2 befindlichen Gasvolumens während des Gießprozesses erfolgen kann. Erwähnt sei in diesem Zusammenhang, dass ggf. sämtliche Einlegeteile, die in die Gieß-Kokille eingebracht werden, vorgewärmt und somit an das Temperaturniveau der eingefahrenen Kokille angeglichen werden können, um Temperaturspannungen zu vermeiden, jedoch kann dies sowie eine Vielzahl weiterer Details durchaus abweichend von obigen Erläuterungen gestaltet sein, ohne den Inhalt der Patentansprüche zu verlassen.

## Patentansprüche

1. Rad für ein Kraftfahrzeug mit einem zumindest abschnittsweise innerhalb einer Speiche (1b) verlaufenden und im Felgenbett (1e) mündenden Luftkanal (4) zur Befüllung eines Reifens,
**dadurch gekennzeichnet, dass** der Luftkanal (4) zumindest in der Speiche (1b) durch eine beim gießtechnischen Herstellen des Rades (1) in die entsprechende Kokille eingelegte Rohrleitung (2) gebildet wird.

2. Rad nach Anspruch 1,
**dadurch gekennzeichnet, dass** sich die Rohrleitung (2) von der Mündungsstelle (2b) im Felgenbett (1e) bis zum Bereich der Radnabe (1a) erstreckt.

3. Verfahren zur Herstellung eines Rades nach Anspruch 1 oder 2,
**dadurch gekennzeichnet, dass** die Rohrleitung (2) beim Gießprozess mit ihrem der Mündungsstelle (2b) im Felgenbett (1e) gegenüberliegenden Ende (2a) über einen Kokilleneinsatz (3) oder einen separaten Schieber in der Kokille gehalten wird.

4. Verfahren nach Anspruch 3,
**dadurch gekennzeichnet, dass** die Rohrleitung (2) während des Gießprozesses über den Kokilleneinsatz (3) entlüftet wird.

5. Verfahren zur Herstellung eines Rades nach Anspruch 1 oder 2,
**dadurch gekennzeichnet, dass** die Felgenbett-Mündungsstelle (2b) der Rohrleitung (2) beim Gießprozess verschlossen ist und im Zuge der spanabhebenden Bearbeitung des Felgenprofils offengelegt wird.

## Claims

1. A wheel for a motor vehicle comprising an air channel (4) extending at least in sections within a spoke (1b) and opening in the rim well (1e) to fill a tyre, **characterised in that** the air channel (4), at least in the spoke (1b), is formed by a tube (2) inserted into the corresponding mould during casting production of the wheel (1) by casting.

2. A wheel according to claim 1, **characterised in that** the tube (2) extends from the opening point (2b) in the rim well (1e) to the region of the wheel hub (1a).

3. A method for producing a wheel according to claim 1 or 2, **characterised in that** the tube (2) is held in the mould during the casting process with its end (2a) opposing the opening point (2b) in the rim well (1e) via a mould insert (3) or a separate slide.

4. A method according to claim 3, **characterised in that** the tube (2) is vented via the mould insert (3) during the casting process.

5. A method for producing a wheel according to claim 1 or 2, **characterised in that** the rim well opening point (2b) of the tube (2) is closed during the casting process and is exposed during machining of the rim profile.

## Revendications

1. Roue pour un véhicule automobile, comportant un canal d'air (4), destiné à remplir un pneu, qui s'étend au moins par endroits à l'intérieur d'une branche (1b) et qui débouche dans l'embase de jante (1e),
**caractérisée en ce que**
au moins dans la branche (1b), le canal d'air (4) est formé par une canalisation (2) insérée dans la coquille correspondante lorsqu'on fabrique la roue (1) selon la technique de fonderie.

2. Roue selon la revendication 1,
**caractérisée en ce que**
la canalisation (2) s'étend du débouché (2b) dans l'embase de jante jusque dans la zone du moyeu de roue (1a).

3. Procédé pour fabriquer une roue selon la revendication 1 ou 2,
**caractérisé en ce que**
pendant l'opération de coulée, par l'intermédiaire d'un insert de coquille (3) ou d'un coulisseau distinct, la canalisation (2) est maintenue dans la coquille par son extrémité opposée (2a) au débouché (2b) dans l'embase de jante (1e).

4. Procédé selon la revendication 3,
**caractérisé en ce que**
la canalisation (2) est même éventée par l'intermédiaire de l'insert de coquille (3) pendant l'opération de coulée.

5. Procédé pour fabriquer une roue selon la revendication 1 ou 2,
**caractérisé en ce que**
le débouché (2b) - dans l'embase de jante - de la canalisation (2) est fermé pendant l'opération de coulée et est dégagé lorsque le profil de jante est usiné par enlèvement de copeaux.
